# DEMANDE DE BREVET EUROPEEN

(11) **EP 1 452 362 A1**
(43) Date de publication de la demande: **01.09.2004**
(21) Numéro de dépôt: 04290496.1
(22) Date de dépôt: 24.02.2004
(51) Int. Cl.: B60J 5/04, B62D 65/00

(54) **Procédé de montage d'un lève-vitre associée sur une custode et ensemble de custode correspondant**

(30) Priorité: 28.02.2003 FR 0302473
(71) Demandeur: Peugeot Citroen Automobiles SA, 78140 Vélizy Villacoublay (FR)
(72) Inventeur: Felsinger, Christophe, 90200 Giromagny (FR)
(74) Mandataire: Blot, Philippe Robert Emile

(57) **Abrégé**

Dans ce procédé de montage d'un lève-vitre (22) et d'une vitre associée (20) sur une custode (1), on assemble le lève-vitre et la vitre l'un avec l'autre et on réalise dans la custode une découpe de réception du lève-vitre pourvu de la vitre. Puis, on introduit et on immobilise dans cette découpe le lève-vitre pourvu de la vitre. On obtient ainsi rapidement un ensemble de custode offrant une qualité de montage améliorée

## Description

La présente invention concerne un procédé de montage d'un lève-vitre et d'une vitre associée sur une custode de carrosserie automobile, ainsi qu'un ensemble de custode pour un véhicule automobile.

Les carrosseries de nombreux véhicules automobiles comportent actuellement, au niveau de leurs ailes arrières, des custodes latérales équipées d'une ou de plusieurs vitres. Pour augmenter le confort de ces véhicules, les vitres de custode sont de plus en plus fréquemment adaptées pour être escamotées, de la même façon que les vitres des portes des véhicules. Pour entraîner ces vitres de custode, il est nécessaire de monter sur la custode correspondante un lève-vitre comportant un mécanisme, généralement électrique, d'entraînement de la vitre entre une position déployée et une position escamotée.

Actuellement, le montage de ce lève-vitre et de la vitre de custode associée s'effectue en plusieurs étapes successives consistant à monter le lève-vitre sur la paroi interne de la custode, à positionner la vitre par rapport à la custode, et assembler cette vitre avec le lève-vitre déjà monté sur la custode.

Ces procédés présentent de nombreux inconvénients : ils sont longs à mettre en oeuvre, rendent difficile le positionnement relatif entre le lève-vitre et la vitre, et conduisent de ce fait à une qualité de montage souvent insuffisante.

Le but de la présente invention est de proposer un procédé de montage qui soit rapide et facile à mettre en oeuvre, tout en garantissant une qualité de montage importante.

A cet effet, l'invention a pour objet un procédé de montage d'un lève-vitre et d'une vitre associée sur une custode de carrosserie automobile, dans lequel avant d'assembler le lève-vitre ou la vitre avec la custode, on assemble le lève-vitre et la vitre l'un avec l'autre et on réalise dans la custode une découpe de réception du lève-vitre pourvue de la vitre, puis on introduit et on immobilise le lève-vitre pourvu de la vitre dans cette découpe.

Suivant d'autres caractéristiques de ce procédé, prises isolément ou selon toutes les combinaisons techniquement possibles :
- pour assembler le lève-vitre et la vitre l'un avec l'autre, on utilise un gabarit de positionnement relatif ;
- on introduit le lève-vitre pourvu de la vitre dans la découpe de la custode suivant une direction sensiblement parallèle à la face extérieure de la custode.

L'invention a également pour objet un ensemble de custode pour un véhicule automobile, du type comportant une vitre escamotable, une custode qui comprend un panneau extérieur et un panneau intérieur formant entre eux la fente de passage pour la vitre, et un lève-vitre adapté pour escamoter et déployer la vitre par rapport à la custode, pour lequel le panneau intérieur est muni d'un rebord qui s'étend en direction du panneau extérieur et dans lequel est réalisée une découpe de réception du lève-vitre muni de la vitre.

Suivant d'autres caractéristiques de cet ensemble de custode, prises isolément ou selon toutes les combinaisons techniquement possibles :
- la découpe débouche dans la fente de passage pour la vitre ;
- le lèvre-vitre comprend un mécanisme d'entraînement de la vitre et un support de ce mécanisme qui est pourvu d'une platine conformée à la découpe de réception du lève-vitre et adaptée pour être solidarisée à la custode ;
- la platine est constituée en acier à haute limite d'élasticité ;
- la platine est pourvue de trous adaptés pour recevoir des pions de positionnement du lève-vitre par rapport à la custode ;
- les trous s'étendent suivant des directions sensiblement parallèle et sensiblement perpendiculaire à la face extérieure de la custode.

L'invention sera mieux comprise à la lecture de la description qui va suivre, donnée uniquement à titre d'exemple et faite en se référant aux dessins sur lesquels :
- la figure 1 est une vue en perspective d'une custode pour un ensemble selon l'invention ;
- la figure 2 est une vue en perspective d'un lève-vitre et d'une vitre associée ; et
- la figure 3 est une vue en perspective de l'ensemble de custode obtenu par le montage selon l'invention du lève-vitre et de la vitre de la figure 2 sur la custode de la figure 1.

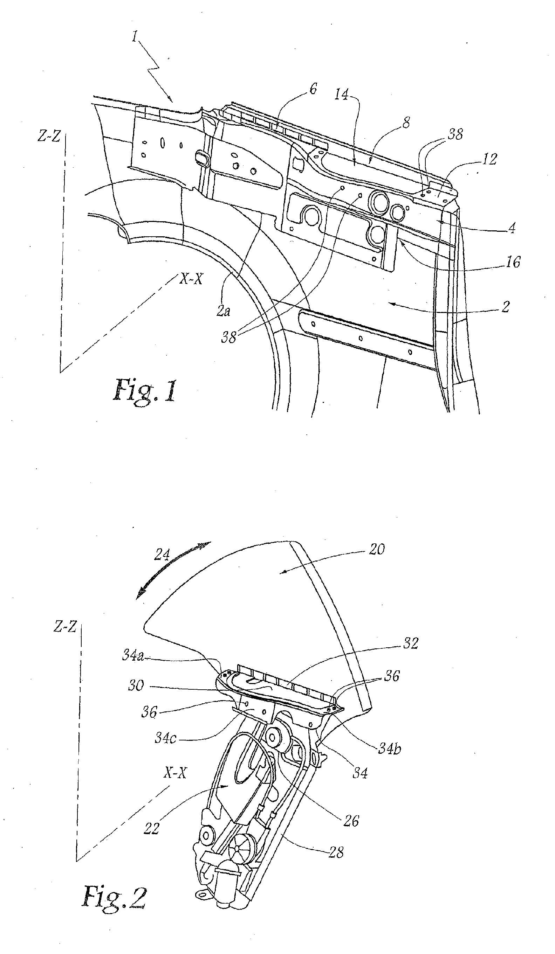

Sur la figure 1 est représentée une custode 1 formant la partie arrière droite d'une carrosserie automobile. On entend ici par « custodes » les deux parties arrières de chaque côté de la carrosserie, destinées à être située à l'aplomb de chacune des roues arrières du véhicule automobile considéré. Dans toute la suite, par commodité, les termes extérieur, intérieur, supérieur et inférieur seront considérés par rapport à la carrosserie automobile prise dans son ensemble, dans sa position courante d'utilisation ultérieure. De la sorte, sur les figures 1 à 3, les termes supérieur et inférieur concernent les parties respectivement haute et basse des figures, l'axe Z-Z matérialisant une direction sensiblement verticale, et les termes extérieur et intérieur concernent respectivement les parties opposée au lecteur et tournée vers le lecteur de ces figures, l'axe X-X matérialisant une direction sensiblement horizontale selon l'axe de vision du lecteur.

Comme représenté sur la figure 1, la custode 1 comporte un panneau extérieur 2 sensiblement plan et délimitant inférieurement un passage 2a pour une roue arrière droite non représentée. La custode comprend également un panneau intérieur 4 bombé vers l'intérieur

Sur ses côtés avant et arrière, le panneau 4 est rigidement fixé sur la face intérieure du panneau extérieur 2.

A leur extrémité supérieure, les panneaux 2 et 4 délimitent entre eux une fente 6 qui s'étend sur une partie de la longueur de la custode 1. Cette fente est bordée, du côté du panneau extérieur 2, par une ligne de lécheurs 8 et, du côté du panneau intérieur 4, d'une ligne 10 de tampons en mousse.

Le panneau intérieur 4 est pourvu dans sa partie supérieure d'un rebord 12 qui s'étend sensiblement perpendiculairement au reste du panneau, en direction du panneau extérieur 2. A l'intérieur de ce rebord 12 est formée une découpe 14 de forme générale rectangulaire et débouchant sur son côté extérieur dans la fente 6. Cette découpe interrompt la ligne de tampons 10.

Les panneaux 2 et 4 forment ainsi entre eux un logement 16 dont la partie inférieure est librement ouverte et dans la partie supérieure duquel débouchent la fente 6 et la découpe 14.

Sur la figure 2 est représentée une vitre de custode 20 assemblée avec un lève-vitre 22, ces éléments occupant par rapport aux axes X-X et Z-Z leur position ultérieure de montage sur la custode 1.

Le lève-vitre 22 est adapté pour déplacer la vitre 20 entre une position déployée dans laquelle seule une faible partie de la vitre recouvre le lève-vitre, et une position escamotée dans laquelle la majeure partie de la vitre recouvre le lève-vitre. La vitre 20 est par exemple déplaçable suivant un mouvement de pivotement autour d'un axe parallèle à l'axe X-X, selon la double-flèche 24.

Le lève-vitre 22 est pourvu à cet effet d'un mécanisme 26 d'entraînement de la vitre 20 entre ses positions escamotée et déployée. Ce mécanisme est adapté pour être relié électriquement à une unité d'alimentation électrique et de commande non représentée.

Le lève-vitre 22 comporte également un support rigide 28 sur lequel est monté le mécanisme 26. Ce support 28 est muni dans sa partie supérieure d'une platine sensiblement plane 30 qui s'étend transversalement au reste du support et qui présente un contour périphérique sensiblement complémentaire de celui de la découpe 14. Cette platine est réalisée en un acier à haute limite d'élasticité. Elle est pourvue sur son côté tourné vers la vitre d'une ligne 32 de tampons en mousse, analogues à ceux de la ligne 10.

Sur ses autres côtés, la platine 30 est pourvue d'un rebord saillant 34 constitué de deux parties d'extrémité 34a et 34b qui s'étendent dans le plan du reste de la platine et d'une partie courante 34c qui s'étend suivant l'axe Z-Z. La partie 34c est par exemple obtenue par pliage.

Dans le rebord 34 sont formés des trous traversants 36. Les axes des trous formés dans les parties 34a et 34b s'étendent suivant la direction de l'axe Z-Z et les axes des trous formés dans la partie 34c s'étendent suivant la direction de l'axe X-X.

Le montage de la vitre 20 et du lève-vitre 22 sur la custode 1 est le suivant :

Dans un premier temps, on assemble l'un avec l'autre la vitre 20 et le lève-vitre 22 de façon à obtenir l'objet représenté sur la figure 2. Cette opération préliminaire de montage s'effectue au moyen d'un gabarit de positionnement relatif entre la vitre 20 et le lève-vitre 22.

Une fois la vitre 20 et le lève-vitre 22 assemblés l'un avec l'autre, on introduit dans la découpe 14 le lève-vitre 22, suivant la direction Z-Z, c'est-à-dire suivant une direction essentiellement parallèle au panneau extérieur 2 de la custode 1. Bien entendu, la découpe 14 est dimensionnée de façon à pouvoir recevoir le lève-vitre 22 sans endommager celui-ci. L'introduction du lève-vitre se poursuit jusqu'à ce que la platine 30 vienne en prise sur le rebord 12 du panneau extérieur 2. Plus précisément, le rebord 34 de la platine vient prendre appui sur la face supérieure du rebord 12, recouvrant ainsi la partie supérieure du panneau intérieur 4. Le mécanisme 26 du lève-vitre est alors essentiellement disposé dans le logement 16.

Puis on positionne avec précision le lève-vitre 22 par rapport au panneau intérieur 4, au moyen par exemple de pions de positionnement introduits dans au moins certains des trous 36 du rebord 34 et coopérant avec des trous correspondants 38 formés dans le panneau 4. Ce positionnement assure que, d'une part, la vitre de custode 20 occupe un positionnement correcte vis-à-vis de la carrosserie du véhicule lorsqu'elle est en position déployée, et, d'autre part, que la ligne de tampons 32 soit dans le prolongement de la ligne 10.

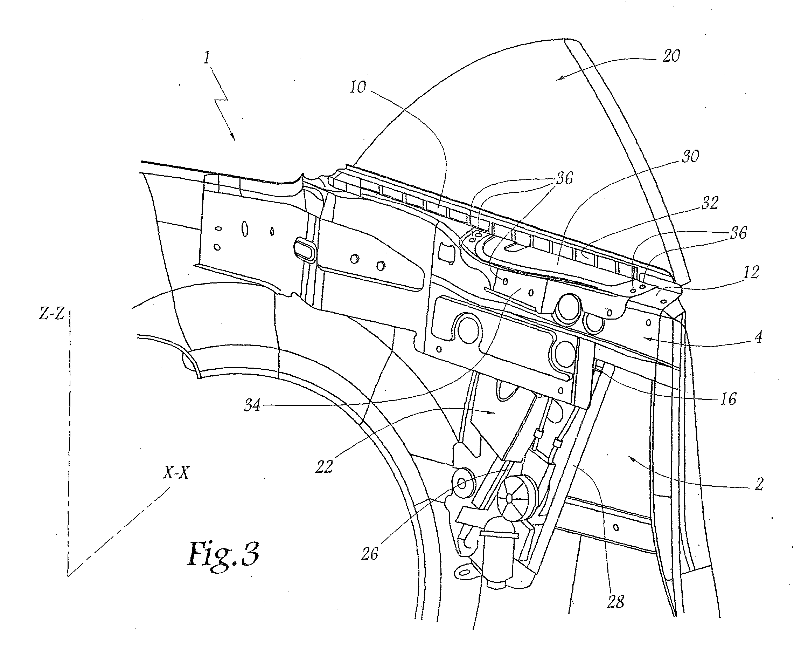

Une fois le positionnement effectué, on solidarise rigidement le lève-vitre 22 au panneau extérieur 2, formant alors un ensemble de custode totalement assemblé représenté sur la figure 3. La découpe 14 est ainsi refermée par la platine 30 qui, notamment en raison de sa réalisation en acier à haute limite d'élasticité, garantit une bonne tenue aux chocs pour l'ensemble de custode.

Le procédé selon l'invention permet ainsi d'obtenir rapidement et en un seul geste d'assemblage avec la custode l'ensemble de custode désiré, le positionnement relatif des éléments de cet ensemble étant parfaitement assuré.

Divers aménagements et variantes du procédé de montage et de l'ensemble de custode décrits ci-dessus sont envisageables.

## Revendications

1. Procédé de montage d'un lève-vitre et d'une vitre associée sur une custode de carrosserie automobile, **caractérisé en ce que**, avant d'assembler le lève-vitre (22) ou la vitre (20) avec la custode (1), on assemble le lève-vitre et la vitre l'un avec l'autre et on réalise dans la custode une découpe (14) de réception du lève-vitre pourvue de la vitre, puis on introduit et on immobilise le lève-vitre (22) pourvu de la vitre (20) dans cette découpe.

2. Procédé suivant la revendication 1, **caractérisé en ce que**, pour assembler le lève-vitre (22) et la vitre (20) l'un avec l'autre, on utilise un gabarit de positionnement relatif.

3. Procédé suivant la revendication 1 ou 2, **caractérisé en ce qu'**on introduit le lève-vitre (22) pourvu de la vitre (20) dans la découpe (14) de la custode (1) suivant une direction (Z-Z) sensiblement parallèle à la face extérieure de la custode.

4. Ensemble de custode pour un véhicule automobile, du type comportant une vitre escamotable (20), une custode (1) qui comprend un panneau extérieur (2) et un panneau intérieur (4) formant entre eux la fente (6) de passage pour la vitre (20), et un lève-vitre (22) adapté pour escamoter et déployer la vitre par rapport à la custode, **caractérisé en ce que** le panneau intérieur (4) est muni d'un rebord (12) qui s'étend en direction du panneau extérieur et dans lequel est réalisée une découpe (14) de réception du lève-vitre (22) muni de la vitre (20).

5. Ensemble de custode suivant la revendication 4, **caractérisé en ce que** ladite découpe (14) débouche dans la fente (6) de passage pour la vitre (20).

6. Ensemble de custode suivant la revendication 4 ou 5, **caractérisé en ce que** le lèvre-vitre (22) comprend un mécanisme (26) d'entraînement de la vitre (20) et un support (28) de ce mécanisme qui est pourvu d'une platine (30) conformée à la découpe (14) de réception du lève-vitre et adaptée pour être solidarisée à la custode (1).

7. Ensemble de custode suivant la revendication 6, **caractérisé en ce que** la platine (30) est constituée en acier à haute limite d'élasticité.

8. Ensemble de custode suivant la revendication 6 ou 7, **caractérisé en ce que** la platine (30) est pourvue de trous (36) adaptés pour recevoir des pions de positionnement du lève-vitre (22) par rapport à la custode (1).

9. Ensemble de custode suivant la revendication 8, **caractérisé en ce que** les trous (36) s'étendent suivant des directions sensiblement parallèle (Z-Z) et sensiblement perpendiculaire (X-X) à la face extérieure de la custode (1).
